# EUROPEAN PATENT APPLICATION

(11) **EP 1 806 654 A2**
(43) Date of publication of application: **11.07.2007**
(21) Application number: 06123422.5
(22) Date of filing: 03.11.2006
(51) Int. Cl.: G06F 9/445

(54) **A method and system for installing an application on a wireless mobile device**

(30) Priority: 30.11.2005 IL 17228105
(71) Applicant: Emoze Ltd., Ra'anana 43662 (IL)
(72) Inventor: Moshe, Dgani, Holon 58552 (IL); Moshe, Levi, Petach-Tikva (IL)
(74) Representative: Betten & Resch

(57) **Abstract**

A method for installation by a computing device of an application from a website to a mobile device of a user. The method includes the step of installing software of the mobile device on the computing device. The method also includes connecting the mobile device to the computing device and downloading the installation application from the website to the computing device, logging in by the user to the website for the purpose of creating an account on the website and install the application on his mobile device and logging on by the user from his mobile device for access purposes, such that the installation is monitored from the computing device and such that the user is able to access data from the computing device.

## Description

### FIELD OF THE INVENTION

The present invention generally relates to wireless communication and in particular to a method and system for installing an application on a wireless mobile device when initiated from a PC.

### BACKGROUND OF THE INVENTION

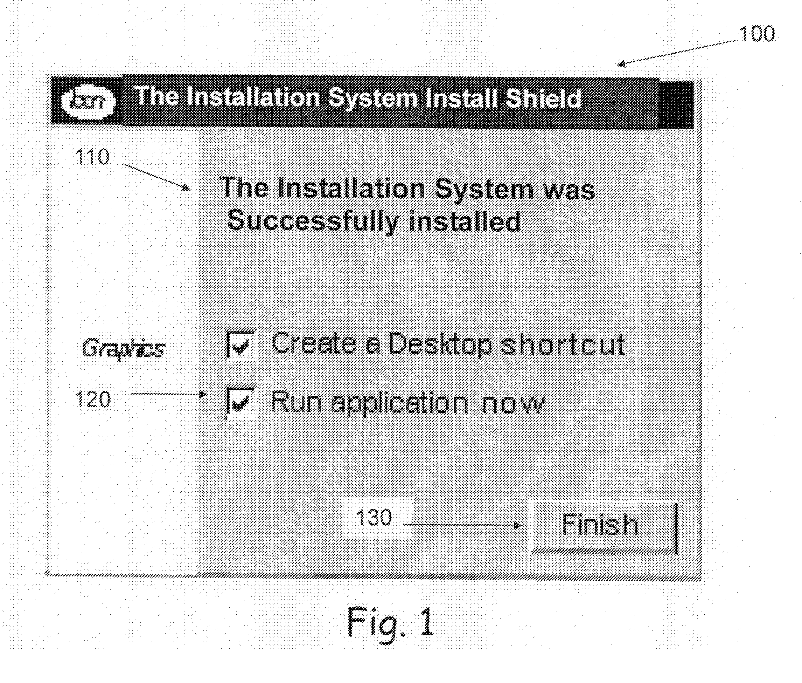

Fig. 1 is a prior art schematic diagram graphically representing communications from an email server to a wireless mobile device. The BlackBerry Enterprise Server BES) in prior art Fig. 1 initiates connections to the wireless network in an outbound direction. To support the BlackBerry wireless email solution in a firewall environment:
1. The firewall must be configured to allow computers within the company that are running the BlackBerry Enterprise Server to initiate TCP/IP connections to an outside server listening on port 3101; and
2. The BlackBerry servers keep messages transferred from the internal corporate server.

Thus, communication must be able to take place into and out of the corporate firewall 110.

US patent no. 5,625,670 by Campana,et al, assigned to NTP Corp., similarly to Blackberry, discloses an electronic mail system with RF communications to mobile processors. A system for transmitting information from one of a plurality of originating processors A-N to at least a plurality of destination processors (A-N) which may be transported during operation in accordance with the invention includes at least one gateway switch, a gateway switch storing information received from one of the at least one originating processor prior to transmission of the information to the at least one destination processor; a RF information transmission network for transmitting stored information received from one of the at least one gateway switch, by RF transmission to at least one destination processor; at least one interface switch, an interface switch connecting a gateway switch to the RF transmission network and transmitting stored information received from one of the at least one gateway switch to the RF information transmission network; and wherein the information is transmitted to a receiving interface switch by the electronic mail system in response to an address of the receiving interface switch which has been added to the information originated by the originating processor by either the originating processor or gateway switch and the information is transmitted from the receiving interface switch to the RF information transmission network with an address of the destination processor to receive the information which has been added by either the originating processor, a gateway switch or the receiving interface switch.

Thus, it would be advantageous to have a method and a system to provide for installing an application on a wireless mobile device when initiated and monitored from a PC.

### SUMMARY OF THE INVENTION

Accordingly, it is a principle object of the present invention to provide a method and a system to provide for installing an application on a wireless mobile device when initiated from a PC.

It is another principle object of the present invention to provide a method and a system to provide for installing an application on a wireless mobile device when monitored from a PC.

It is a further principle object of the present invention to provide a method and a system to provide for installing an application on a wireless mobile device wherein the installation process is seamless to the user.

It is one other principle object of the present invention to provide a method and a system to provide for installing an application on a wireless mobile device wherein the installation process is simplified for the user.

A method is disclosed for installation by a computing device of an application from a website to a mobile device of a user. The method includes the step of installing software of the mobile device on the computing device. The method also includes connecting the mobile device to the computing device and downloading the installation application from the website to the computing device, logging in by the user to the website for the purpose of creating an account on the website and install the application on his mobile device and logging on by the user from his mobile device for access purposes, such that the installation is monitored from the computing device and such that the user is able to access data from the computing device.

The present invention allows the user to read email instantly on his mobile device. The system automatically and instantly transfers incoming mail to the user's mobile phone and allows him to send mail and perform all other operations, such as deleting mail and moving messages between folders.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
Fig. 1 is a screen shot verifying the successful installation of the handset software, constructed according to the principles of the present invention;
Fig. 2 is a screen shot of the logon dialog box, constructed according to the principles of the present invention;
Fig. 3 is a screen shot of the first dialog box for creating a user installation account, constructed according to the principles of the present invention;
Fig. 4 is a screen shot of the second dialog box for creating a user installation account, constructed according to the principles of the present invention;
Fig. 5 is a screen shot of the first Define user E-Mail account dialog box, constructed according to the principles of the present invention;
Fig. 6 is a screen shot of the second Define user E-Mail account dialog box, constructed according to the principles of the present invention;
Fig. 7 is a screen shot of the first Define user Mobile dialog box, constructed according to the principles of the present invention;
Fig. 8 is a screen shot of the second Define user Mobile dialog box, constructed according to the principles of the present invention; and
Fig. 9 is a screen shot of the Identify connected device dialog box, constructed according to the principles of the present invention.

### DETAILED DESCRIPTION OF AN EXEMPLARY EMBODIMENT

The principles and operation of a method and a system according to the present invention may be better understood with reference to the drawings and the accompanying description, it being understood that these drawings are given for illustrative purposes only and are not meant to be limiting.

### PREPARATIONS

Before the user starts the installation, it is preferable to perform the following:
1. Install the user's handset PC software on the computer where the user intends to run the installation system and configure it by following the instructions provided in the handset's user guide. The user may have done that already upon purchasing the handset.
2. Connect the handset to the PC through the USB connection.

These two pre-installation steps shorten the installation process. However, if they are not carried out in advance, the installation procedure guides the user through the necessary steps.

Fig. 1 is a screen shot verifying the successful installation of the handset software 100, constructed according to the principles of the present invention.

### STEP 1. DOWNLOAD AND INSTALL.

1. Access the installation Web site.
2. Click the Download button.
   The File Download dialog box appears.
3. Run the installation by clicking the Run (or Open) button.
4. Follow the instructions displayed on the screen.
   At the end of the installation process the success message 110 appears.
5. Make sure that the "Run application now" box 120 is checked and click the Finish button 130.
   The Logon dialog box appears.

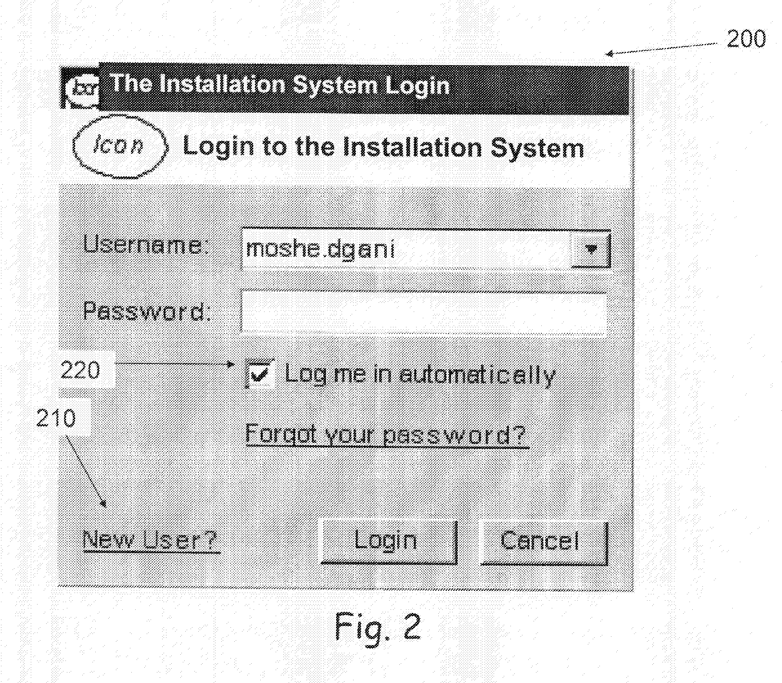

Fig. 2 is a screen shot of the logon dialog box 200, constructed according to the principles of the present invention

### STEP 2. 4 SUB-STEPS

### SUB-STEP 1: USER REGISTRATION

Next the user opens an installation account.

### IDENTIFICATION DETAILS

1. In the Logon dialog box 200, click the New User link 210.
   The first Create User Installation Account (1) dialog box opens.

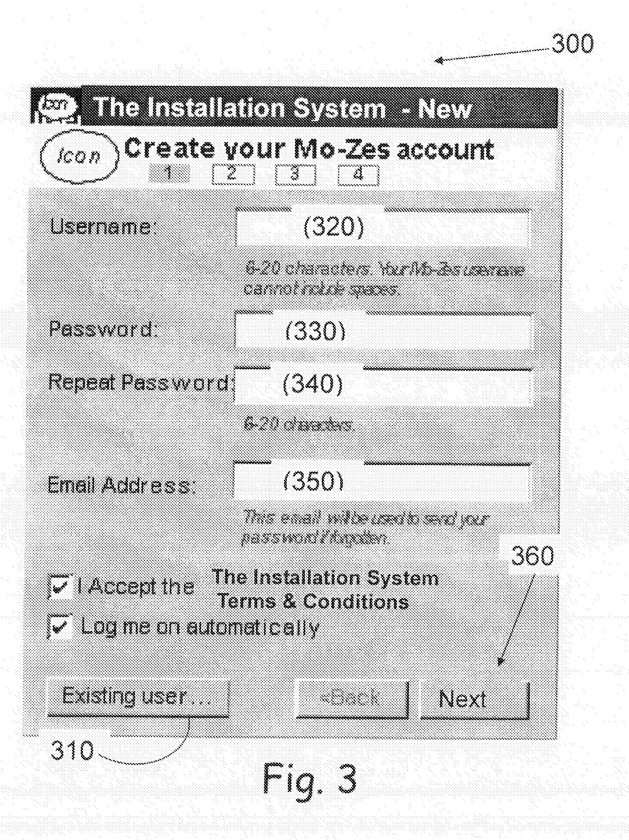

   Fig. 3 is a screen shot of the first dialog box for creating a user installation account 300, constructed according to the principles of the present invention.
   If the user clicked New User link 210 in Fig. 2 by mistake he should then click the Existing User button 310 in Fig. 3 to return to Logon dialog box 200 in Fig. 2. With reference again to Fig. 3,
2. In Username 320, user preferably types a name that will uniquely identify him in the installation system.
3. In Password 330, user enters a password of his choice.
4. In Repeat Password 340, user enters the same password again.
5. In E-mail Address 350, enter the address where he wants to receive his password, in case he forgets it.
6. Click the Next button 360.
   This opens the second Create User Installation Account (1) dialog box.

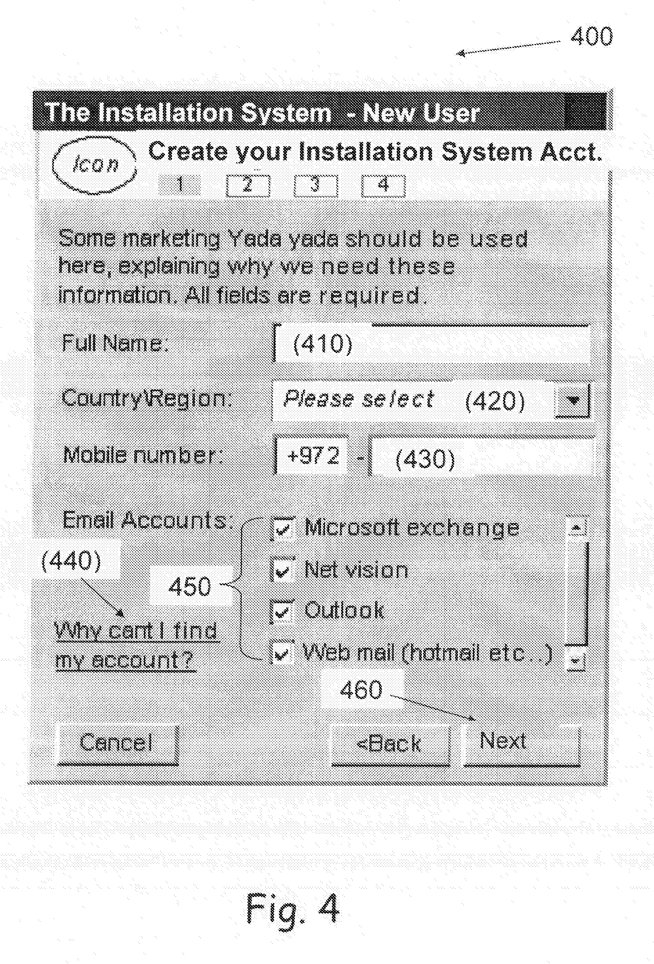

Fig. 4 is a screen shot for the second dialog box for creating a user installation account 400, constructed according to the principles of the present invention.

### SUB-STEP 2: E-MAIL ACCOUNTS

1. In Full Name 410, user enters his full name.
2. In Country/Region 420, the user selects the country to which his handset belongs.
   The country code of the selected country is automatically applied.
3. In Mobile Number 430, in the box next to the country code, the user enters his mobile phone number, without leading zeros.
   This is the entry that establishes the link between e-mail on the user's PC and his mobile phone. All interaction between the two takes place through this number.
4. If the installation system identifies the user's e-mail software (for example, Outlook), the E-Mail Accounts section now lists the e-mail accounts. It is assumed that the user will recognize them at this point.
   The user may have an e-mailing application installed on his computer that the installation system does not support. For more details the user can click on the "Why can't I find my account" link 440 on the dialog box...
   ... and do the following:
   - Check the boxes 450 that correspond to the mail accounts he wants to access from his handset.
   - Clear those that correspond to the accounts that he does not wish to access from his handset.
   - If he has a Web mail account, such as a Hotmail account, and he wishes to access it through his handset, check the Web Mail box. He will later be asked to provide his Web mail details.
5. Click the Next button 460.

### SPECIAL CASE: E-MAIL PASSWORD (OPTIONAL)

In some cases, the installation system might not be able to read the e-mail accounts' passwords. If this is the case, the first Define User Installation E-Mail Account (2) dialog box 500 appears (skip this section if it does not appear).

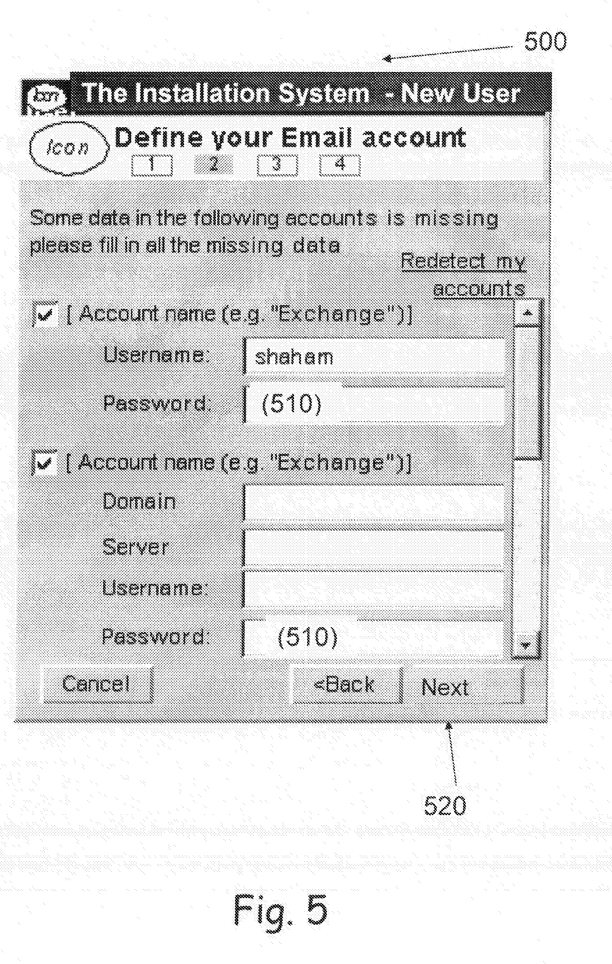

Fig. 5 is a screen shot of the first Define User E-Mail Account dialog box 500, constructed according to the principles of the present invention.

Multiple sections may appear in this dialog box if the installation system could not read the password of multiple accounts. At this stage, the user needs to know his e-mail account details and the password used for each.
1. Go through the Password fields 510 and enter the missing passwords.
2. When done, click the Next button 520.

### WEB E-MAIL ACCOUNTS (OPTIONAL)

If the user indicated that he has a Web mail accounts by checking the Web Mail checkbox, the second Define User E-Mail Account (2) dialog box appears. If he has not checked Web Mail, he skips this section.

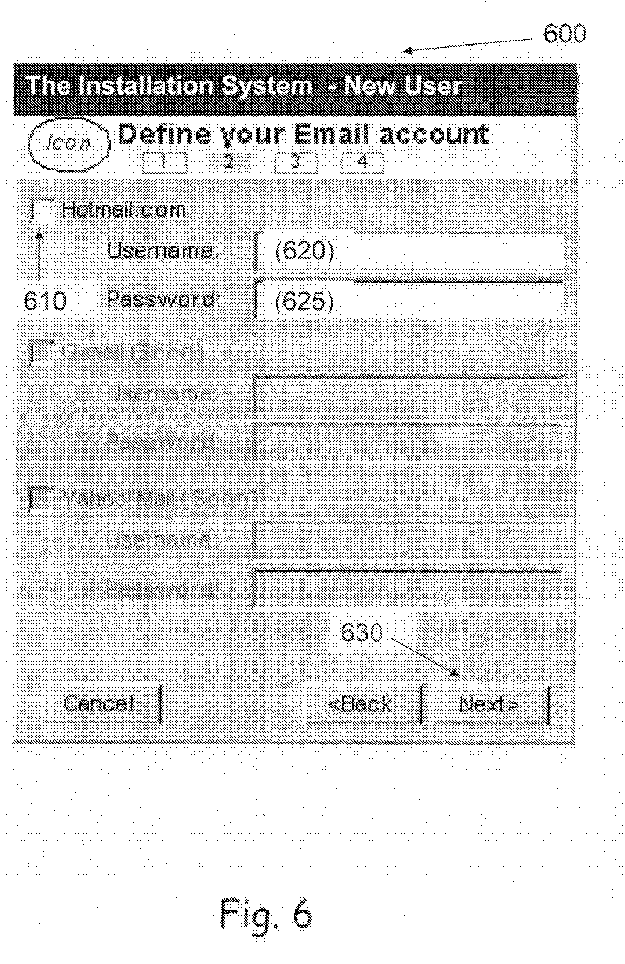

Fig. 6 is a screen shot of the second Define user E-Mail account dialog box 600, constructed according to the principles of the present invention.
The user should preferably know the username and password that he is using to access those accounts.
1. The user checks the boxes that correspond to his Web mail accounts 610.
2. For each such account, he enters the username 620 and password 625 used to access them.
3. Click the Next button 630.

### SUB-STEP 3: MOBILE CLIENT REGISTRATION

When the user clicks the Next button, the first Define user Mobile dialog box appears:

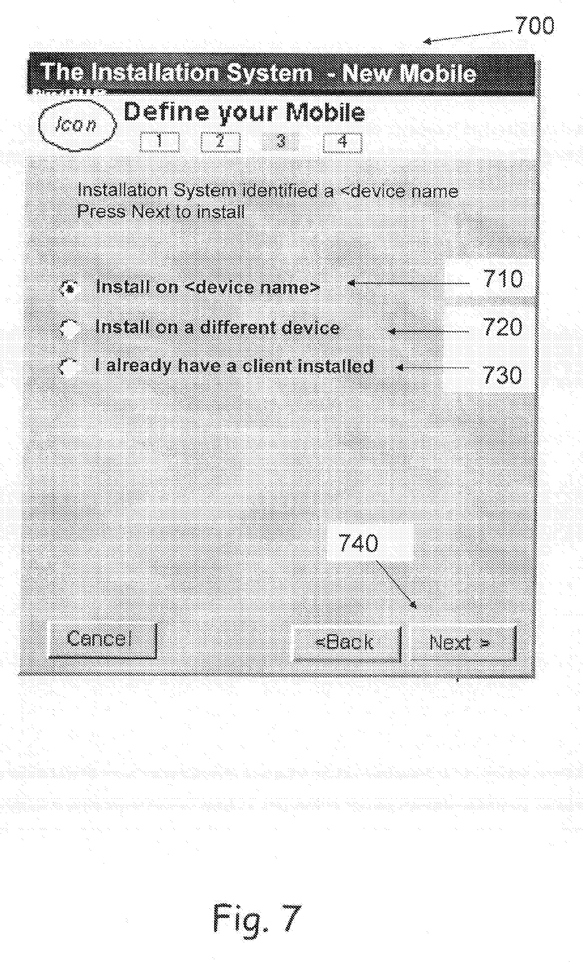

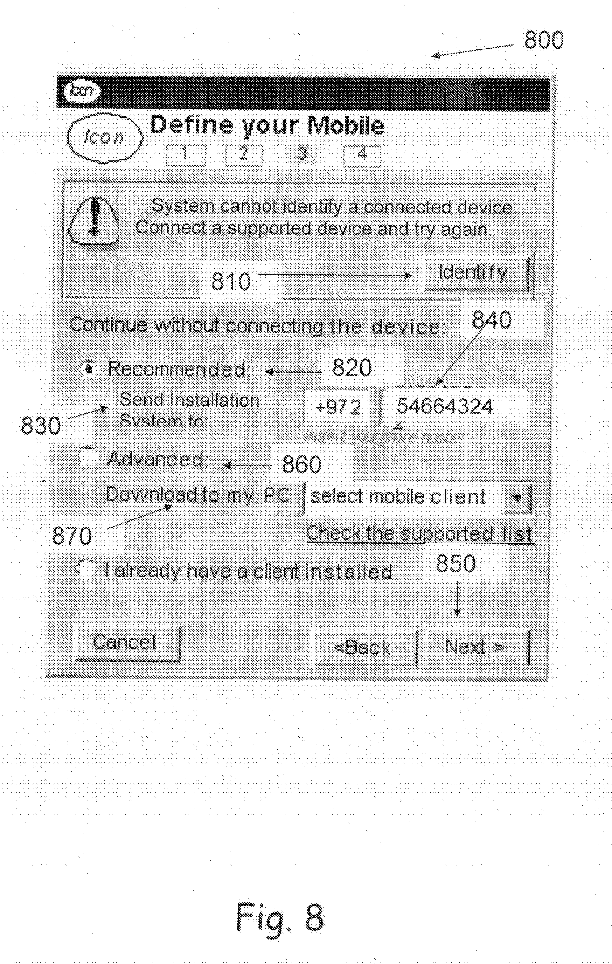

Fig. 7 is a screen shot of the first Define user Mobile dialog box 700, constructed according to the principles of the present invention.
1. The user selects one of the available options:
   **Install system on <Device name> 710:** Select this option to continue with the installation and click Next.
   A progress bar appears indicating that the installation system is being downloaded to his mobile. Go to step 2.
   **Install system on a different device 720:** He selects this option if the currently connected device is not the one on which he wants to install the system. He connects the device and clicks Next 740 and then clicks the Identify button See Fig. 8 below) to continue from there.
   **I already have a client Installed 730:** He selects this option if he re-launched the installation process only in order to create another user account. He clicks Next 740 to finish.
2. The user waits until the Sign In button appears on his handset's screen.
3. The user selects the Sign-In button and enter his username and password on the handset.
   This activates Next button 740 in the dialog box showing the progress bar.
4. The user clicks Next 740 on the PC.
   The success message appears. The user is ready to use the installation system on his mobile.

### TROUBLESHOOTING THE INSTALLATION

If the user has not fulfilled the pre-requisites listed in the Preparations section, the second Define Your Mobile (3) dialog box appears.

Fig. 8 is a screen shot of the second Define user Mobile dialog box 800, constructed according to the principles of the present invention

### SUB-STEP 4: MOBILE INSTALLATION:

The user can do one of the 4 following options:

### Option 1: Retry downloading the installation system

1. Implement the pre-requisites described in Preparations.
2. Make sure that the mobile is correctly connected to the computer.
3. Click the Identify button 810.
   The Identify Connected Device dialog box appears.

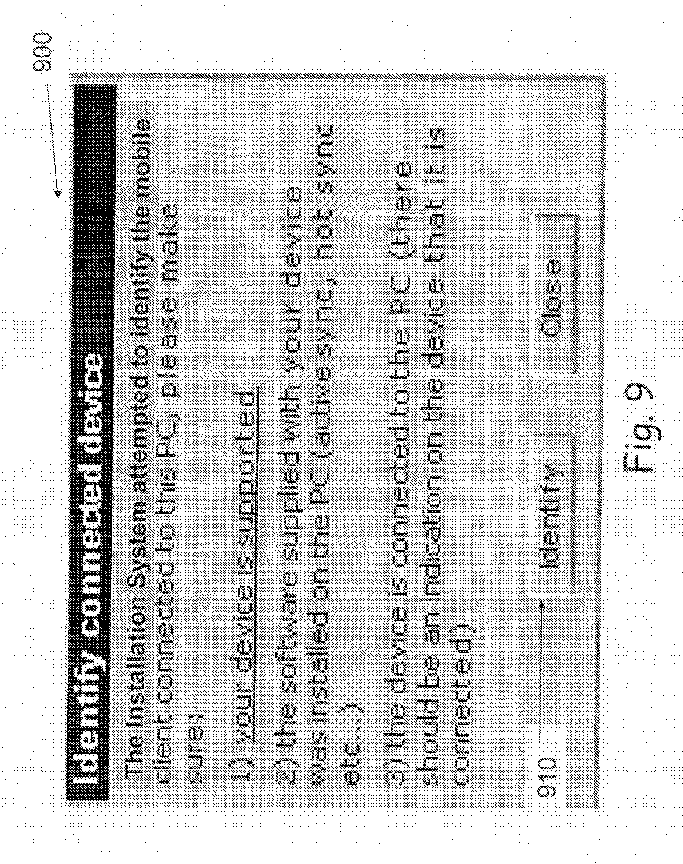

   Fig. 9 is a screen shot of the Identify connected device dialog box 900, constructed according to the principles of the present invention.
4. Click the Identify button 910.
   If everything is in order, the user should see a progress bar indicating that the installation system is being downloaded to the mobile.

### Option 2: User Sends The installation System to his mobile number

If the user does not have a cable to connect the mobile to the computer or, for some reason the cable connection is not in order, the installation system can be sent directly to user's mobile phone number:
1. Select the Recommended radio button 820, with reference now to Fig. 8.
2. In "Send Installation System to" 830, the user enters his mobile handset's telephone number.
   Note that the number 840 that automatically appears is the one specified for receiving the password in case it is forgotten. The user can change the number, if necessary.
3. The user should click the Next button 850.
If everything is in order, a progress bar appears indicating that the installation system is being downloaded to the mobile.

### Option 3: User Downloads Installation System to his PC (advanced users)

If the above method does not help, the user needs to install the installation system manually on his handset.
1. Select the Advanced radio button 860.
2. In "Download to my PC" 870, the user selects his type of mobile device.
3. User clicks Next 850 and follows the instructions for storing the software on his disk.
4. The user uses his PC's and the handset's communication means to transfer the installation file to the handset.
5. The user executes the installation file on his handset.

### Option 4: User already has a client installed

The user selects this option if he re-launched the installation process only in order to create another user account. The user clicks Next 850 to finish.

### FINALIZE INSTALLATION

The feature wherein the user synchronizes his mail using his handset's synchronization is affected. During the installation, the installation system disables this function in order to be the sole mail synchronizer. The user can reactivate this feature through the installation system settings on his handset. When both the installation system and this option are active, synchronization contradictions may occur.

To access e-mail from his handset, the user's PC must be on and connected to the Internet. When the user re-starts his PC (for example, at the beginning of the workday), he also needs to connect to the installation system if he wishes to access his e-mail through his mobile handset. The options are:
- If he checked the "Log me in automatically" checkbox 220 (see Fig. 2) during the installation process, his PC automatically logs on the installation system and allows access to email from the handset.
- If the user has not checked "Log me in automatically" checkbox 220, he should double-click the installation system icon on his desktop (or select it from Windows Start, Programs menu) and log on to the installation system by entering his username and password.

After successfully logging on, the installation system icon appears in the Windows system tray (lower-right corner of the Windows desktop).
The user can change the logon configuration through the installation system Settings.

### GENERAL TROUBLESHOOTING

1. The user clicked New User by mistake.
   Click the "Existing user" button 310 (see Fig. 3) to return to Logon screen 200.
2. The installation system says that my handset is not supported or not connected
   If the user selected the "cable" option, he should make sure that the handset is firmly connected to his computer's USB connector.
3. There are no email accounts listed from which the user can select those that he wants to access from his handset."
   The user may have an e-mailing system installed on his computer that the installation system does not support. For a list of supported emailing systems click on the "Why can't I find my account" link on the dialog box or visit the installation system website.

It is to be understood that the phraseology and terminology employed herein are for the purpose of description, and should not be regarded as limiting.

It is important, therefore, that the scope of the invention is not construed as being limited by the illustrative embodiments set forth herein. Other variations are possible within the scope of the present invention as defined in the appended claims and their equivalents.

## Claims

1. A method for installation by a computing device of an application from a website to a mobile device of a user, said method comprising:
installing software of the mobile device on the computing device;
connecting the mobile device to the computing device;
downloading the installation application from the website to the computing device;
logging in by the user to the website for the purpose of creating an account on the website and install the application on his mobile device; and
logging on by the user from his mobile device for access purposes, such that the installation is monitored from the computing device and such that the user is able to access data from the computing device.

2. The method of claim 1, wherein said data is email of the user that has been received on the computing device.

3. The method of claim 1 or 2, further comprising troubleshooting the installation.

4. The method of any one of claims 1 to 3, wherein said connecting is through a USB connection of the computing device.

5. The method of any one of claims 1 to 4, wherein the computing device is a personal computer.

6. The method of any one of claims 1 to 5, wherein the mobile device is a mobile phone.

7. A system for installation by a computing device of a downloading application from a website to a mobile device of a user, said system comprising:
a computing device on which application software of the mobile device is installed;
a mobile device of the user connected to the computing device;
an installation application downloaded from the website to the computing device,
such that the installation is monitored from the computing device and such that the user is able to access data from the computing device.

8. The system of claim 7, wherein said data is email of the user that has been received on the computing device.

9. The system of claim 7 or 8, wherein said connection is through a USB connection of the computing device.

10. The system of any one of claims 7 to 9, wherein the computing device is a personal computer.

11. The system of any one of claims 7 to 9, wherein the mobile device is a mobile phone.
